# EUROPÄISCHE PATENTSCHRIFT

(11) **EP 1 395 462 B1**
(45) Veröffentlichungstag und Bekanntmachung des Hinweises auf die Patenterteilung: **19.07.2006**
(21) Anmeldenummer: 02740371.6
(22) Anmeldetag: 21.05.2002
(51) Int. Cl.: B60R 11/02, H04B 1/08, G06F 1/16

(54) **HALTERUNG FÜR EINE TRAGBARE RECHNERVORRICHTUNG**
RETAINING ELEMENT FOR A PORTABLE COMPUTER DEVICE
ELEMENT DE MAINTIEN POUR DISPOSITIF D'ORDINATEUR PORTABLE

(30) Priorität: 23.05.2001 DE 10125063
(43) Veröffentlichungstag der Anmeldung: 10.03.2004
(73) Patentinhaber: ROBERT BOSCH GMBH, 70442 Stuttgart (DE)
(72) Erfinder: STROHMEIER, Wolfgang, 31137 Hildesheim (DE); KELLNER, Jens, 30161 Hannover (DE)
(86) Internationale Anmeldenummer: PCT/DE2002/001855
(87) Internationale Veröffentlichungsnummer: WO 2002/094614

(56) Entgegenhaltungen:
- EP-A- 1 081 579
- WO-A-01/03981
- WO-A-98/39665
- DE-A- 4 228 605
- DE-A- 19 848 361
- US-B1- 6 169 655

## Beschreibung

### Stand der Technik

Die Erfindung geht aus von einer Halterung für eine tragbare Rechnervorrichtung nach der Gattung des Hauptanspruchs. Aus der DE 198 03 178 A2 ist ein Bedienteil für eine Autoradiovorrichtung bekannt, das als ein tragbarer, sogenannter Personal Digital Assistant (PDA) ausgebildet ist. Der PDA dient als ein tragbarer Computer, mit dem Daten an die Radiovorrichtung übertragen werden können und der zur Speicherung von Adressen und Telefonnummern dient. Eine Bedienung erfolgt über einen Touch-Screen-Monitor, der an dem als PDA ausgebildeten Bedienteil angeordnet ist. Für die Bedienung des Autoradios ist das Anbringen des Bedienteils in eine Halterung erforderlich.

Eine gattungsgemäße Halterung ist aus der WO01/03981A1 bekannt.

### Vorteile der Erfindung

Die erfindungsgemäße Halterung für eine tragbare Rechnervorrichtung weist die Merkmale des Anspruchs 1 auf. Sie hat auch den Vorteil, daß die Halterung zumindest Teil einer Schublade ist und die Rechnervorrichtung durch das Einschieben verdeckbar ist. Hierdurch ist eine sichere Halterung einer tragbaren Rechnervorrichtung in einem Kraftfahrzeug gewährleistet, insbesondere während einer Fahrt. Gegenüber einem reinen Aufstecken einer tragbaren Rechnervorrichtung auf eine Halterung ist die tragbare Rechnervorrichtung für den Fall einer starken Beschleunigung oder eines Abbremsens, z.B. einem Unfall, besser gegen ein Herauslösen aus der Halterung gesichert. Ferner wird bei einem Verlassen des Fahrzeugs, bei dem ein Fahrer die Rechnervorrichtung nicht mitführen will, die Rechnervorrichtung durch das Anbringen in der Halterung bei eingeschobener Schublade verdeckt, wodurch ein Diebstahlsanreiz vermieden wird. Ferner ist durch das Anbringen in eine erfindungsgemäße Halterung ein Bildschirm und/oder eine Tastatur der Rechnervorrichtung benutzerfreundlicher positionierbar gegenüber einem frontal aufgesteckten Bedienteil.

Weiterhin ist vorteilhaft, die Halterung in einer Fahrerinformationsvorrichtung, insbesondere in einem Autoradio anzuordnen. Besondere Funktionen der Fahrerinformationsvorrichtung sind hierbei durch die Rechnervorrichtung eingebbar. Neben der verdeckbar angeordneten Rechnervorrichtung können weitere Bedienelemente an dem Radio angeordnet sein, die auch eine Bedienung ohne die in der Halterung anzubringende Rechnervorrichtung ermöglichen. Hierdurch ist möglich, die Rechnervorrichtung als ein optionales Ergänzungsgerät zu der Radiovorrichtung anzubieten, während eine Bedienung allein der Radiofunktionen bzw. der Fahrerinformationsfunktionen durch weitere, an der Fahrerinformationsvorrichtung anzubringende Bedien- und Anzeigeelemente erfolgen kann. Durch die in den Unteransprüchen aufgeführten Maßnahmen sind vorteilhafte Weiterbildungen und Verbesserungen der im Hauptanspruch angegebenen Halterung möglich. Besonders vorteilhaft ist, dass der Bildschirm und/oder die Tastatur der Rechnervorrichtung an Klappen angeordnet sind, die sich bei einem Öffnen der Schublade automatisch öffnen und in einer für einen Benutzer günstigen Position verrasten. Auch bei einer geöffneten Schublade ist die Rechnervorrichtung durch ein Einlegen in die Halterung gut gesichert.

Ferner ist vorteilhaft, die Rechnervorrichtung derart auszugestalten, dass die Rechnervorrichtung über an der Halterung angeordnete Bedienelemente, z.B. also über Bedienelemente des Autoradios, steuerbar ist. Hierdurch können für Funktionen der tragbaren Rechnervorrichtung, die z.B. als ein sogenannter PDA, vorzugsweise mit einer berührungsempfindlichen Anzeige, ausgestattet ist, zur komfortablen Bedienung während der Fahrt die an dem Autoradio vorhandenen Bedienelemente genutzt werden. Währende bei einer normalen Benutzung des PDA dieser mit einer Hand gehalten und mit der anderen Hand bedient wird, z.B. mit einem hierfür vorgesehenen Bedienstift, ist eine durch die Handhaltung unterstützende Positionierung bei der Halterung im Fahrzeug nicht möglich, so dass die Bedienknöpfe des Autoradios die Bedienung vereinfachen.

Ferner ist vorteilhaft, insbesondere für eine Rechnervorrichtung die keine Abdeckklappe für eine Tastatur hat und auf ihrer Vorderseite eine Anzeige aufweiset, die Rechnervorrichtung durch ein geeignetes Positionierungsmittel bei dem Öffnen der Schublade in eine für den Betrachter günstige Ableseposition zu bringen.

Weiterhin ist vorteilhaft, daß die als Schublade ausgeführte Halterung motorisch geöffnet wird, so daß die Rechnervorrichtung bequem entnehmbar ist.

### Zeichnung

Ein Ausführungsbeispiel der Erfindung ist in der Zeichnung dargestellt und in der nachfolgenden Beschreibung näher erläutert. Es zeigen:

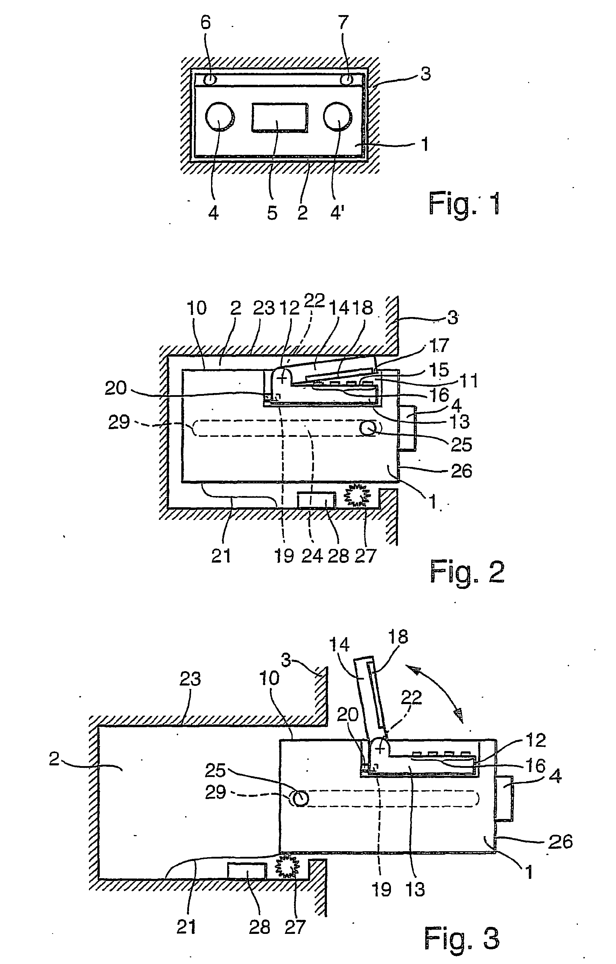

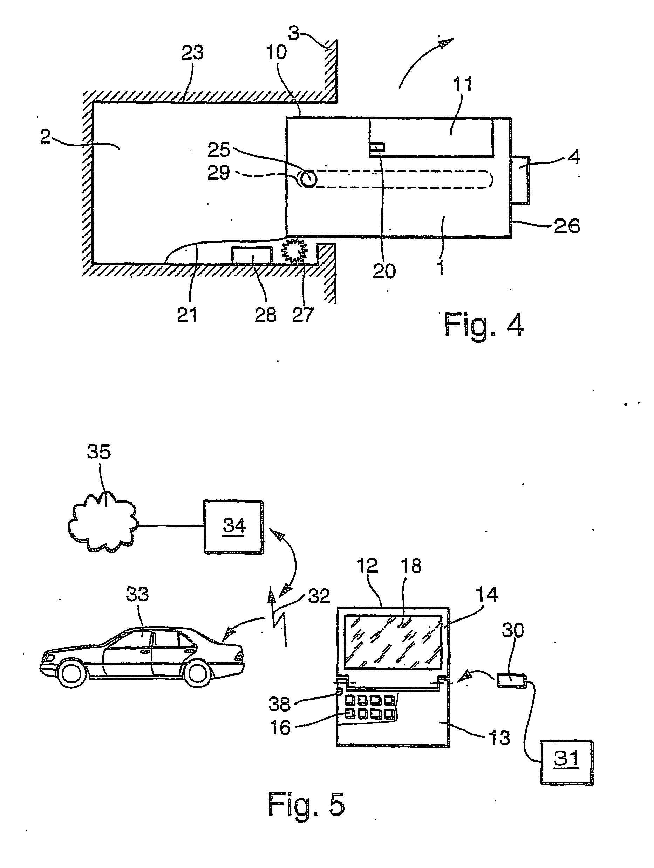

Figur 1 eine Aufsicht auf ein erfindungsgemäß ausgeführtes Autoradio, Figur 2 eine Seitenansicht eines erfindungsgemäßen Autoradios mit einer in eine Halterung eingebrachten Rechnervorrichtung in einem Einbauschacht, Figur 3 das Autoradio der Figur 2 in gleicher Ansicht bei einem teilweise aus dem Einbauschacht ausgefahrenen Autoradio, Figur 4 das Autoradio der Figur 3 mit entnommener Rechnervorrichtung, Figur 5 eine Aufsicht auf eine erfindungsgemäße tragbare Rechnervorrichtung bei einem Betrieb unabhängig von dem Autoradio,

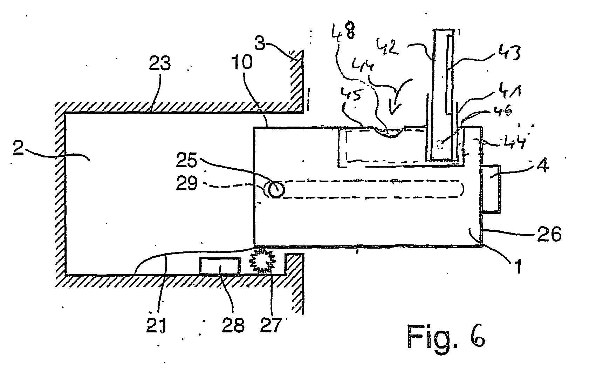

Figur 6 eine Seitenansicht eines weiteren erfindungsgemäßen Autoradios mit einer anderen Ausführung der Halterung der Rechnervorrichtung.

### Beschreibung des Ausführungsbeispiels

Eine erfindungsgemäße Halterung kann tragbare Rechnervorrichtungen in Verbindung mit beliebigen Geräten sicher haltern, insbesondere in einem Kontakt zu anderen Rechnereinheiten, an Schreibtischen und insbesondere auch in Fahrzeugen. Die vorliegende Erfindung wird im Folgenden anhand einer Halterung für eine tragbare Rechnervorrichtung in einem Kraftfahrzeug erläutert. Eine Schublade zur Aufnahme einer Rechnervorrichtung kann dabei an verschiedenen Stellen des Fahrzeugs, z.B. in der Mittelkonsole, angeordnet sein. Die Schublade kann als eine herkömmliche Schublade vorzugsweise aus einem Kunststoffmaterial ausgeführt sein, und muss keine weiteren Funktionen außer der Aufnahme der Rechnervorrichtung ausweisen. In einem bevorzugten, im weiteren erläuterten Ausführungsbeispiel ist zumindest ein Teil eines Autoradios als eine Schublade ausgebildet, die als eine erfindungsgemäße Halterung mit einer Vertiefung für eine Rechnervorrichtung angeordnet ist.

In der Figur 1 ist eine Aufsicht auf ein Autoradio 1 dargestellt, das in einen Einbauschacht 2 in einer Mittelkonsole 3 zwischen der Fahrer- und der Beifahrerposition in einem Kraftfahrzeug angeordnet ist. Das Autoradio 1 weist Bedienelemente 4, 4' auf, mit denen unter anderem die Lautstärke und ein von dem Autoradio 1 auszugebendes Radioprogramm wählbar ist. Eine Anzeige insbesondere eines gewählten Senders, einer Lautstärke oder einer gewählten Senderfrequenz erfolgt in einer Anzeige 5, die vorzugsweise zwischen den Bedienelementen 4, 4' an dem Autoradio 1 angeordnet ist. Neben der Autoradiofunktion können in dem Autoradio 1 allgemeine Funktionen einer Fahrerinformationsvorrichtung integriert sein, z.B. eine Navigationsfunktion zur Führung eines Fahrzeugs in einem Straßennetz, ein Kontakt zu einem Datennetz, z.B. dem Internet mittels dem Aufruf von Daten über das Datennetz bzw. dem Übertragen elektronischer Nachrichten. Ferner kann in das Autoradio eine Telefonvorrichtung integriert sein. An dem Autoradio 1 ist ein Mikrofon 6 angeordnet, das zur Spracheingabe und damit zur Steuerung des Autoradios 1 dient. Ferner ist eine Drucktaste 7 angeordnet, die zum Öffnen einer von dem Autoradio 1 gebildeten Schublade führt, indem das Autoradio 1 aus dem Einbauschacht 2 hinausfährt. Einzelheiten des Autoradios, wie z.B. eine Tunereinrichtung zur Umwandlung eines Antennensignals in ein Audiosignal, eine Verstärkerschaltung sowie Speichereinheiten für eine Senderspeicherung oder für andere Funktionen einer Fahrerinformationsvorrichtung sind in der Figur 2 nicht dargestellt, jedoch vorzugsweise mit in das Autoradio 1 integriert.

In der Figur 2 ist ein Querschnitt durch das erfindungsgemäße Autoradio 1 gemäß der Figur 1 dargestellt. Hier und im Folgenden bezeichnen die gleichen Bezugszeichen auch die gleichen Elemente. Auf einer Oberseite 10 des Autoradios 1 ist eine Vertiefung 11 eingebracht, in der als eine Vertiefung 11 eine Halterung für eine Rechnervorrichtung 12 in das Autoradio 1 eingebracht ist, wodurch das Autoradio 1 eine Schublade zur Halterung der Rechnervorrichtung 12 bildet. Die Rechnervorrichtung 12 weist eine erste Klappe 13 und eine zweite Klappe 14 auf. An einer ersten Seite 15 der ersten Klappe 13 ist eine Tastatur 16 angeordnet. An der zweiten Klappe 14 ist an einer der Tastatur 16 zuweisenden Seite 17 ein Bildschirm 18 angeordnet. Die zweite Klappe 14 ist gegenüber der ersten Klappe 13 in einem Drehgelenk 22 gelagert. In einem ersten Ausführungsbeispiel ist die zweite Klappe 14 gegenüber der ersten Klappe 13 durch ein in dem Drehgelenk 22 angeordnetes Federelement, z.B. eine Torsionsfeder, verspannt. Damit drückt die zweite Klappe 14 auf eine Wandung 23 des Einbauschachtes 2. Bei einem Herausfahren des Autoradios aus dem Einbauschacht 2 wird die Rechnervorrichtung 12 über eine Kante des Einbauschachts 2 hinausgeführt, so daß die zweite Klappe 14 sich gegenüber der ersten Klappe 13 öffnet. Wird die Rechnervorrichtung 12 von einem Benutzer mitgenommen, ist die zweite Klappe 14 gegenüber der ersten Klappe 13 durch in der Figur 2 nicht dargestellte Verriegelungselemente, z.B. ein Rasthaken oder an einem Gehäuse der Rechnervorrichtung 12 angeordnete Magnete, so zusammenhaltbar, daß ein selbständiges Öffnen der zweiten Klappe 14 gegenüber der ersten Klappe 13 vermieden wird. In einem zweiten Ausführungsbeispiel ist an dem Drehgelenk 22 ein Motor, vorzugsweise ein Elektromotor angeordnet, der in Abhängigkeit von einem Steuersignal der Rechnervorrichtung 12 die zweite Klappe 14 gegenüber der ersten Klappe 13 bewegt. In dem zweiten Ausführungsbeispiel ist in einem Zustand, in dem das Autoradio in den Einbauschacht 2 eingeschoben ist, die zweite Klappe 14 bündig auf der ersten Klappe 13 aufgelegt.

In einem bevorzugten Ausführungsbeispiel kann die Rechnervorrichtung auch über die Bedienelemente 4, 4' bedient werden. Auf eine derartige Bedienmöglichkeit wird in der Anzeige 18 der Rechnervorrichtung hingewiesen. In einer bevorzugten Ausführungsform wird automatisch von einer Steuerung des Autoradios über die Bedienknöpfe 4, 4' nach einem Herausfahren der Schublade 1 und einem Aufklappen der zweiten Klappe 14 umgeschaltet.

An der Rechnervorrichtung 12 ist ein erster elektrischer Kontakt 19 angeordnet, die in elektrischem Kontakt zu einem zweiten elektrischen Kontakt 20 steht, die in der Vertiefung 11 an dem Autoradio 1 angeordnet ist. Über eine elektrische Verbindung 21, vorzugsweise ein flexibles Folienband, ist das Autoradio 1 mit übrigen Komponenten des Fahrzeugs, z.B. mit Fahrzeugsensoren, mit einer Antennenvorrichtung oder weiteren Anzeigen im Fahrzeug verbunden. Auch eine Spannungsversorgung erfolgt vorzugsweise über die elektrische Verbindung 21. Über die elektrischen Kontakte 19, 20 ist also die Rechnervorrichtung 12 mit der Fahrzeugelektronik verbindbar. Die elektrischen Kontakte 19, 20 sind als zueinander passende Steckerkontakte ausgeführt, wobei die Kontakte vorzugsweise bei einem Einstecken der Rechnervorrichtung 12 in die Vertiefung 11 verrasten und damit die Rechnervorrichtung 12 in der Vertiefung 11 fixieren. Über die elektrischen Kontakte 19, 20 erfolgt neben einem Datenaustausch auch eine Spannungsversorgung der Rechnervorrichtung 12 bzw. ein in der Rechnervorrichtung 12 angeordneter Akkumulator wird über die elektrischen Kontakte 19, 20 aufgeladen.

An dem Autoradio 1 ist eine Führungsschiene 24 angeordnet, in der das Autoradio 1 gegenüber einer Lagerung 25, die an einer seitlichen Wand des Einbauschachtes 2 angeordnet ist, senkrecht zu einer Frontblende 26 des Autoradios 1 aus dem Einbauschacht 2 hinaus beweglich ist. Eine Bewegung erfolgt z.B. über einen Zahnradantrieb 27, wobei der Zahnradantrieb 27 von einem Elektromotor 28 angetrieben wird. Ein Herausschieben des Autoradios 1 aus dem Einbauschacht 2 ist bis zu einem vorgegebenen, programmierten Anschlag des Zahnradantriebes 27 oder bis zu einem Anschlag 29 der Führungsschiene 24 ist das Autoradio 1 aus dem Einbauschacht möglich. Das Herausschieben des Autoradios 1 kann über ein Drücken der Drucktaste 7 oder über eine Spracheingabe über das Mikrofon 6 ausgelöst werden.

In der Figur 3 ist das Autoradio 1 in einem aus dem Einbauschacht zumindest teilweise herausbewegten Zustand dargestellt. In der als Halterung für die Rechnervorrichtung 12 ausgeführten Vertiefung 11 ist die Rechnervorrichtung 12 über die Tastatur 16 bedienbar, wobei eine Anzeige von Daten in dem Bildschirm 18 der Rechnervorrichtung erfolgt. Mit einem Herausschieben des Autoradios 1 hat sich entweder mechanisch oder durch eine elektrische Ansteuerung über die ersten und zweiten elektrischen Kontakte 19, 20 die zweite Klappe 14 automatisch geöffnet. In einem bevorzugten Ausführungsbeispiel rastet die zweite Klappe 14 gegenüber der ersten Klappe 13 in einem Winkel von etwa 120° ein und ermöglicht so dem Benutzer eine optimale Ablesbarkeit des vorzugsweise als Flüssigkristallanzeige ausgeführten Bildschirms 18. Die elektrischen Verbindungen 21 sind so flexibel ausgeführt, daß sie sich einer veränderten Position des Autoradios 1 gegenüber dem Einbauschacht 2 anpassen. Durch ein erneutes Betätigen der Drucktaste 7 oder durch einen hinreichenden Druck auf die Frontblende 26 des Autoradios 1 wird ein automatisches, motorisches Zurückziehen des Autoradios 1 in den Einbauschacht 2 ausgelöst. Entweder wird dabei durch einen mechanischen Druck durch die Wandung der Mittelkonsole 3 oder durch eine elektrische Ansteuerung ein Einklappen der zweiten Klappe 14 ausgelöst. Das Autoradio 1 wird in die Position gemäß der Figur 2 in den Einbauschacht 2 zurückgezogen. Das Autoradio 1 bildet somit eine Schublade für die Rechnervorrichtung 12 aus. Bei einem eingeschobenen Zustand des Autoradios 1 schließt die Frontblende 26 vorzugsweise bündig oder nahezu bündig mit der Mittelkonsole 3 ab. Die Rechnervorrichtung 12 wird dabei vollständig verdeckt, so daß sie für einen Betrachter von außen nicht sichtbar ist.

Die Rechnervorrichtung 12 ist aus der Vertiefung 11 entnehmbar und als eine tragbare Rechnervorrichtung verwendbar. In der Figur 4 ist das Autoradio 1 nach einer Entnahme der Rechnervorrichtung 12 dargestellt. Eine Bedienung des Autoradios erfolgt nun über die an der Frontblende 26 angeordneten Bedienelemente 4, 4' bzw. die Anzeige 5. An die zweiten elektrischen Kontakte 20 ist gegebenenfalls eine andere, in die Vertiefung 11 des Autoradios 1 einbringbare Rechnervorrichtung einlegbar.

In einem weiteren, in der Zeichnung nicht dargestellten Ausführungsbeispiel ist unter der Vertiefung 11 ein Datenträgerlaufwerk angebracht, so daß vor Einlegen einer Rechnervorrichtung 12 in die Vertiefung 11 des Autoradios 1 ein Datenträger in das Autoradio 1 einlegbar ist. Dies sind insbesondere magnetische und/oder optische Datenträger, z.B. eine CD-ROM, eine DVD oder ein Magnetband. In einem weiteren, ebenfalls in der Zeichnung nicht dargestellten Ausführungsbeispiel ist die Frontblende 26 hochklappbar, wobei das Datenträgerlaufwerk in diesem Ausführungsbeispiel hinter der Frontblende 26 angeordnet und nach dem Hochklappen der Frontblende 26 zugänglich ist, um einen Datenträger einzulegen, z.B. mit Musik- oder Navigationsdaten.

In der Figur 5 ist ein Betrieb der tragbaren Rechnervorrichtung 12 als ein Einzelgerät dargestellt. Die Tastatur 16 ist vorzugsweise als eine alphanumerische Tastatur, entsprechend einer herkömmlichen Computer- oder Schreibmaschinentastatur ausgeführt. Über einen elektrischen Steckeranschluß 30 ist eine beliebige Computereinheit 31, z.B. ein herkömmlicher Computer mit Bildschirm und Tastatur an die Rechnervorrichtung 12 anschließbar, so daß Daten von der Computereinheit 31 mittels der Rechnervorrichtung 12 an das Autoradio 1 übermittelbar sind. Ferner weist die Rechnervorrichtung 12 eine integrierte Funkschnittstelle 32 auf, die eine drahtlose Funkverbindung, z.B. über eine sogenannte Blue-tooth-Schnittstelle, zu weiteren Funktionen im Fahrzeug 33 herstellen kann, z.B. eine Sicherungsfunktion hinsichtlich der Türschlösser und/oder einer Alarmanlage. Ferner sind über Funk Fahrzeugfunktionen überwachbar, indem Steuergeräte und/oder Fahrzeugsensoren über die Funkschnittstelle 32 von der Rechnervorrichtung 12 abfragbar sind. Ferner erlaubt die Funkschnittstelle 32, vorzugsweise über eine Mobilfunkverbindung, einen Kontakt zu einer Dienstezentrale 34, die mit einem Datennetz 35, vorzugsweise dem Internet verbunden ist. Hierdurch ist ein Datenaustausch der Rechnervorrichtung 12 mit dem Internet möglich. Eine Texteingabe kann dabei einfach bedienbar über die alphanumerische Tastatur erfolgen, so daß elektronische Nachrichten einfach eingegeben und anschließend an einen Empfänger übermittelt werden können. In einem weiteren Ausführungsbeispiel ist an der Computereinheit 31 eine Fahrtroute planbar, die dann in einer als Navigationssystem ausgeführten Fahrerinformationsvorrichtung oder über eine Anzeige 5 des Autoradios gemäß der Figur 1 einem Fahrer ausgegeben wird.

Die Funkschnittstelle der Rechnervorrichtung 12 kann auch durch eine Infrarotschnittstelle ersetzt oder ergänzt werden, für die eine Infrarot-Sende- und Empfangseinheit 36 an der Rechnervorrichtung 12 anzubringen ist.

In einem bevorzugten Ausführungsbeispiel ist das Autoradio 1 nur betriebsfähig bei einer eingelegten Rechnervorrichtung, so daß das Autoradio 1 ohne die eingelegte Rechnervorrichtung keinen Anreiz für einen Diebstahl bietet.

In der Figur 6 ist eine weitere Ausführungsform einer erfindungsgemäßen Halterung und eines erfindungsgemäßen Autoradios dargestellt. Das Autoradio 1 entspricht dabei dem in den Figuren 1 bis 3 erläuterten Ausführungsbeispiel, wobei sich die Ausführung der in das Autoradio 1 eingebrachten Halterung 44 von der Halterung gemäß der Figuren 2 und 3 unterscheidet. Bei dem Ausführungsbeispiel gemäß der Figur 6 ist in die Halterung ein Positionierungsmittel in Form einer Einschubvorrichtung 41 zur Aufnahme einer Rechnervorrichtung 42 angeordnet. Die Einschubvorrichtung 41 ist an einer Achse 46 drehbar in der Halterung 44 gelagert. Befindet sich das Autoradio 1 in dem Einschubschacht 2, so hält die Einschubvorrichtung 41 die Rechnervorrichtung 42 in einer gestrichelt eingezeichneten Ruheposition 45 in der Halterung 11, wobei eine an der Rechnervorrichtung 42 angeordnete Anzeige 43 parallel zu der Oberseite 10 des Autoradios 1 gehalten ist. Wird das Autoradio 1 aus dem Einschubschacht 2 herausgefahren, so dreht sich die Einschubvorrichtung 41 um die Achse 46 gegen die eingezeichnete Pfeilrichtung 48 und richtet die Rechnervorrichtung 42 derart auf, dass eine Oberfläche der Anzeige 43 nunmehr senkrecht zu der Oberseite 10 des Autoradios 1 positioniert ist. Ein Benutzer kann nun die in der Anzeige 43 dargestellten Informationen ablesen. Die Anzeige 43 ist vorzugsweise als eine berührungsempfindliche Anzeigefläche ausgeführt, mit der Funktionen in der Rechnervorrichtung 42 steuerbar sind. In einer bevorzugten Ausführungsform kann nach dem Herausfahren der Schublade 1 eine Steuerung der Funktionen der Rechnervorrichtung 42 auch über die Bedienelemente 4, 4' an der Frontblende 26 des Autoradios 1 erfolgen. Die Einschubvorrichtung 41 weist in der Figur 6 nicht gezeigte Rastmittel auf, die die Einschubvorrichtung 41 mit der Rechnervorrichtung 42 in der in der Figur 6 gezeigten Position senkrecht zu der Oberseite 10 halten. Die Rastverbindung kann z.B. durch ein leichtes Kippen der Rechnervorrichtung 42 mit der Einschubvorrichtung 41 über den Rastpunkt hinaus gelöst werden, so dass die Rechnervorrichtung 42 wieder in die gestrichelt eingezeichnete Ruheposition 45 einklappt. Ferner ist auch ein automatisches Einklappen mittels einem motorischen Antrieb der Achse 46 möglich. Neben einer Positionierung von 90° gegenüber der Oberseite 10 sind auch kleinere Positionierungswinkel, vorzugsweise zwischen 50° und 90° gegenüber der Oberseite 1 möglich. In einer weiteren Ausführungsform kann die Rechnervorrichtung 42 auch durch den Benutzer aus der Ruheposition 45 herausgeklappt werden. Hierzu sind seitlich an der Halterung 44 in das Gehäuse des Autoradios beidseitig Vertiefungen 47 eingebracht, durch die ein Rand der Rechnervorrichtung 42 von einem Benutzer gefasst werden kann, so dass die Rechnervorrichtung 42 zusammen mit der Einschubvorrichtung 41 in die Betrachterposition gemäß der Figur 6 bewegt werden kann. Eine elektrische Kontaktierung der Rechnervorrichtung 42 erfolgt über in der Einschubvorrichtung 41 angeordnete Kontakte. Das Einschubvorrichtung 41 ist in einer bevorzugten Form auswechselbar, so dass es an verschiedene tragbare Rechenvorrichtungen anpassbar ist.

## Patentansprüche

1. Halterung für eine tragbare Rechnervonichtung in einem Kraftfahrzeug, wobei an der Rechnervorrichtung eine Tastatur und/oder ein Bildschirm angeordnet ist, die Halterung (11) zumindest Teil einer Schublade (1) ist, und wobei die Schublade (1) einschiebbar ist und die Rechnervorrichtung (12, 42) durch das Einschieben der Schublade (1) verdeckbar ist, **dadurch gekennzeichnet, dass** die Schublade (1) zumindest ein Teil einer Fahrerinformationsvorrichtung, insbesondere zumindest ein Teil eines Autoradios, ist.

2. Halterung nach Anspruch 1, **dadurch gekennzeichnet, dass** die Fahrerinformationsvorrichtung (1) in einem Einbauschacht (2) gelagert ist und dass die Rechnervorrichtung (12, 42) mit der Fahrerinformationsvorrichtung (1) in den Einbauschacht (2) einbringbar ist.

3. Halterung nach einem der vorhergehenden Ansprüche, **dadurch gekennzeichnet, dass** an der Halterung (11) elektrische Kontakte (20) zur Kontaktierung der Rechnervorrichtung (12) angeordnet sind.

4. Halterung nach Anspruch 3, **dadurch gekennzeichnet, dass** Daten über die elektrischen Kontakte (20) übertragbar sind.

5. Halterung nach einem der vorhergehenden Ansprüche, **dadurch gekennzeichnet, dass** an einer Frontblende (26) der Schublade (1) ein Bedienelement (7) zum vorzugsweise motorischen Öffnen der Schublade (1) angeordnet ist.

6. Halterung nach einem der vorhergehenden Ansprüche, **dadurch gekennzeichnet, dass** an der Halterung (1) Bedienelemente (4,4') angeordnet sind und dass die Rechnervorrichtung (12, 42) mittels der Bedienelemente (4, 4 ') steuerbar ist.

7. Halterung nach einem der vorhergehenden Ansprüche, **dadurch gekennzeichnet, dass** die Rechnervorrichtung (12) Klappen (13, 14) aufweist, dass der Bildschirm (18) und/oder die Tastatur (16) an den Klappen (13, 14) angeordnet sind und dass sich die Klappen (13, 14) bei einem Öffnen der Schublade (1) automatisch öffnen.

8. Halterung nach einem der Ansprüche 1 bis 6, **dadurch gekennzeichnet, dass** die Halterung (11) ein Positionierungsmittel (41) zur Positionierung der Rechnervorrichtung (42) aufweist und dass bei einem Öffnen der Schublade (1) die Rechnervorrichtung aus einer Ruheposition (45) in der Halterung (11) herausklappbar ist.

9. Fahrerinformationsvorrichtung mit einer Halterung nach einem der vorhergehenden Ansprüche.

10. Rechnervorrichtung zum Einlegen in eine Halterung nach einem der Ansprüche 1-8, **dadurch gekennzeichnet, dass** die Rechnervorrichtung (12, 42) durch an der Halterung angeordnete Bedienelemente (4,4') bedienbar ist, wenn die Rechnervorrichtung (12, 42) in die Halterung eingelegt und die Schublade (1) eingeschoben ist.

## Claims

1. Holder for a portable computer apparatus in a motor vehicle, with a keyboard and/or a screen being arranged on the computer apparatus, the holder (11) being at least part of a drawer (1), and it being possible to push in the drawer (1) and conceal the computer apparatus (12, 42) by pushing in the drawer (1), **characterized in that** the drawer (1) is at least a part of a driver information apparatus, in particular at least a part of a car radio.

2. Holder according to Claim 1, **characterized in that** the driver information apparatus (1) is mounted in an installation slot (2), and **in that** the computer apparatus (12, 42) can be placed in the installation slot (2) with the driver information apparatus (1).

3. Holder according to either of the preceding claims, **characterized in that** electrical contacts (20) for making contact with the computer apparatus (12) are arranged on the holder (11).

4. Holder according to Claim 3, **characterized in that** data can be transmitted via the electrical contacts (20).

5. Holder according to one of the preceding claims, **characterized in that** an operator control element (7) for opening the drawer (1), preferably in a motorized fashion, is arranged on a front panel (26) of the drawer (1).

6. Holder according to one of the preceding claims, **characterized in that** operator control elements (4, 4') are arranged on the holder (1), and **in that** the computer apparatus (12, 42) can be controlled by means of the operator control elements (4, 4').

7. Holder according to one of the preceding claims, **characterized in that** the computer apparatus (12) has flaps (13, 14), **in that** the screen (18) and/or the keyboard (16) are arranged on the flaps (13, 14), and **in that** the flaps (13, 14) open automatically when the drawer (1) is opened.

8. Holder according to one of Claims 1 to 6, **characterized in that** the holder (11) has a positioning means (41) for positioning the computer apparatus (42), and **in that** the computer apparatus can be folded out of a rest position (45) in the holder (11) when the drawer (1) is opened.

9. Driver information apparatus having a holder according to one of the preceding claims.

10. Computer apparatus suitable for insertion into a holder according to one of Claims 1-8, **characterized in that** the computer apparatus (12, 42) can be subjected to operator control by operator control elements (4, 4') which are arranged on the holder when the computer apparatus (12, 42) is inserted into the holder and the drawer (1) is pushed in.

## Revendications

1. Support dans un véhicule automobile pour un ordinateur portable avec un clavier et/ ou un écran, le support (11) étant au moins une partie d'un tiroir (1) coulissant et l'ordinateur (12, 42) pouvant être recouvert lorsque le tiroir (1) est rentré,
**caractérisé en ce que**
le tiroir (1) est au moins une partie d'un dispositif d'information du conducteur, en particulier au moins une partie d'un autoradio.

2. Support selon la revendication 1,
**caractérisé en ce que**
le dispositif d'information du conducteur (1) est logé dans un puits de montage (2) et l'ordinateur (12, 42) peut être inséré dans le puits de montage (2) conjointement avec le dispositif d'information du conducteur (1).

3. Support selon l'une quelconque des revendications précédentes,
**caractérisé en ce que**
le support (11) comporte des contacts électriques (20) pour la mise en contact de l'ordinateur (12).

4. Support selon la revendication 3,
**caractérisé en ce que**
des données peuvent être transmises par les contacts électriques (20).

5. Support selon l'une quelconque des revendications précédentes,
**caractérisé par**
un élément de commande (7) sur un habillage frontal (26) du tiroir (1) pour l'ouverture de préférence motorisée du tiroir (1).

6. Support selon l'une quelconque des revendications précédentes,
**caractérisé en ce que**
des éléments de commande (4, 4') disposés sur le support (1) permettent de commander l'ordinateur (12, 42).

7. Support selon l'une quelconque des revendications précédentes,
**caractérisé en ce que**
l'ordinateur (12) présente des volets (13, 14), l'écran (18) et/ou le clavier (16) est disposé sur les volets (13, 14) qui s'ouvrent automatiquement lors d'une ouverture du tiroir (1).

8. Support selon l'une quelconque des revendications 1 à 6,
**caractérisé en ce que**
le support (11) présente un moyen de positionnement (41) pour positionner l'ordinateur (42) et l'ordinateur peut être relevé d'une position de repos (45) dans le support (11) lors d'une ouverture du tiroir (1).

9. Dispositif d'information du conducteur avec un support selon l'une quelconque des revendications précédentes.

10. Ordinateur pour insertion dans un support selon l'une quelconque des revendications 1 à 8,
**caractérisé en ce que**
l'ordinateur (12, 42) est commandable par des éléments de commande (4, 4') disposés sur le support lorsque l'ordinateur (12, 42) est inséré dans le support, le tiroir (1) étant rentré.
